# EUROPÄISCHE PATENTSCHRIFT

(11) **EP 3 924 198 B1**
(45) Veröffentlichungstag und Bekanntmachung des Hinweises auf die Patenterteilung: **31.12.2025**
(21) Anmeldenummer: 20811275.5
(22) Anmeldetag: 20.11.2020
(51) Int. Cl.: B60J 10/18

(54) **METALLBAND**
METAL STRIP
BANDE MÉTALLIQUE

(30) Priorität: 03.12.2019 DE 202019106738 U
(43) Veröffentlichungstag der Anmeldung: 22.12.2021
(60) Teilanmeldung: 25216480.1
(73) Patentinhaber: BFC Fahrzeugteile GmbH, 74321 Bietigheim-Bissingen (DE)
(72) Erfinder: YILDIRIM, Ali, 71334 Waiblingen (DE)
(74) Vertreter: Manitz Finsterwald Patent- und Rechtsanwaltspartnerschaft mbB
(86) Internationale Anmeldenummer: PCT/EP2020/082830
(87) Internationale Veröffentlichungsnummer: WO 2021/110428

(56) Entgegenhaltungen:
- EP-A1- 0 884 209
- EP-A1- 2 401 462
- DE-A1- 102017 123 236
- DE-C1- 10 124 484
- US-A1- 2011 159 311

## Beschreibung

Die vorliegende Erfindung betrifft ein Metallband als Einlage für durch Extrusion mit Kunststoff oder Gummi ummantelte Zier- oder Dichtstreifen oder als Kantenschutz, insbesondere für Kraftfahrzeuge oder Schaltschränke, welches mit geschnittenen und/oder gestanzten Durchbrüchen versehen ist.

Derartige Metallbänder werden insbesondere im Kraftfahrzeugbereich als Einlage für Dichtstreifen zum Abdichten von Motorraum-, Kofferraum- und Türöffnungen eingesetzt. Die kontinuierlich gefertigten Metallbänder sind mit Gummi und/oder flexiblem Kunststoff ummantelt und weisen Schlitze auf, unter anderem, um bei nicht haftmittelbeschichteten Metallbändern ein Durchdringen des Dichtmaterials zu ermöglichen, da die Haftung zwischen Gummi und Metall bzw. zwischen Kunststoff und Metall nicht möglich ist. Andererseits sind haftmittelbeschichtete Metallbänder sehr teuer. Außer Schlitzen, die insbesondere durch rotatives Schneiden hergestellt werden können, können derartige Metallbänder auch gestanzte Durchbrüche aufweisen. Geschnittene oder gestanzte Schlitze können durch Walzstrecken aufgeweitet werden.

Metallbänder der genannten Art werden vor oder nach dem Ummanteln mit dem Dichtmaterial zu einem meist U-förmigen Klemmprofil gebogen, welches auf die Dichtflansche der Öffnung geklemmt wird. Um dabei den Konturen der Öffnung folgen zu können, muss das Klemmprofil meist sowohl in horizontaler als auch in vertikaler Ebene flexibel sein. Zudem soll das Klemmprofil in longitudinaler Richtung stauchbar und/oder dehnbar sein, da die abzudichtenden Öffnungen erhebliche Umfangstoleranzen aufweisen können und ein Ablängen des Dichtstreifens vor Ort äußerst aufwendig wäre.

Andererseits muss das Klemmprofil auch eine gewisse Zugfestigkeit aufweisen, da die Zier- oder Dichtleisten üblicherweise durch Extrudieren hergestellt werden, wobei erhebliche Kräfte in Längsrichtung des Bandes auftreten. Ein weiteres Erfordernis des Klemmprofils besteht darin, eine größtmögliche Klemmkraft auf die Dichtflansche auszuüben.

Um diese Anforderungen zu erfüllen, bestehen bekannte Metallbänder der genannten Art aus Stahl und weisen eine Materialstärke von 0,5 mm und mehr auf. Insbesondere werden Stähle der Kategorie C390 und C590 verwendet. Außerdem werden Bänder aus Aluminium-Magnesium-Legierungen verwendet.

EP 2 401 462 A1 offenbart ein Metallband mit den Merkmalen des Oberbegriffs des Anspruchs 1. Dieses Metallband besteht aus Stahl oder Aluminium. Ein weiteres Metallband wird in der Druckschrift DE 101 24 484 C1 offenbart.

DE 10 2017 123 236 A1 offenbart vielfältige unterschiedliche Stähle, darunter Dualphasenstähle und Mehrphasenstähle oder hochfeste Stähle mit einphasigem Gefüge wie bainitische oder martensitische Stähle.

Der Erfindung liegt die Aufgabe zugrunde, ein Metallband der eingangs genannten Art anzugeben, welches die genannten Forderungen erfüllt, dabei aber ein möglichst geringes Gewicht aufweist. Zudem soll der Materialeinsatz für die Metallbänder bzw. die damit hergestellten Zier- oder Dichtstreifen verringert werden.

Diese Aufgabe wird durch ein Metallband der eingangs genannten Art gelöst, welches dadurch gekennzeichnet ist, dass das Metallband aus mikrolegiertem Stahl besteht und die Materialstärke des Metallbands 0,4 mm oder weniger beträgt.

Unter mikrolegiertem Stahl, auch HSLA-Stahl, ist Stahl zu verstehen, dem sehr geringe Mengen an Vanadin und/oder Niob und/oder Titan zulegiert wurde. Der Anteil der zulegierten Elemente liegt in Summe insbesondere zwischen 0,03 und 0,3%.

Durch die Verwendung von mikrolegiertem Stahl kann eine hohe Zugfestigkeit bereits mit einer geringeren Materialstärke erreicht werden. Es ist daher möglich, Metallbänder für die obengenannten Einsatzzwecke herzustellen, die eine Materialstärke von 0,4 mm oder weniger aufweisen. Dadurch wird Gewicht eingespart. Zudem reduziert sich dadurch die Menge des Dichtmaterials, mit dem das Band umhüllt werden muss.

Bevorzugt besteht das Metallband aus Warm- oder Kaltumformstahl. Hierdurch können besonders gute Eigenschaften, insbesondere hohe Zugfestigkeiten bei gleichzeitig hoher Dehnbarkeit, des mikrolegierten Stahls erreicht werden.

Nach einer bevorzugten Ausführungsform weist das Metallband eine Materialstärke von 0,35 mm oder weniger, insbesondere von 0,3 mm oder weniger auf. Hierdurch kann die Gewichtsreduktion und auch die Verringerung des benötigten Dichtmaterials optimiert werden.

Das erfindungsgemäße Metallband kann beschichtet sein. Die Herstellung des Metallbandes kann durch rotatives Schneiden oder Stanzen und Walzstrecken erfolgen.

Die Erfindung betrifft auch einen Dicht- oder Kantenschutzstreifen, insbesondere für verschließbare Fahrzeugöffnungen, wie Fenster, Türen und Klappen, mit einem erfindungsgemäßen Metallband. Das Metallband dient als Einlage des Dicht- oder Kantenschutzstreifens und kann mit Dichtmaterial umhüllt sein. Der Dicht- oder Kantenschutzstreifen weist die geschilderten Vorteile auf.

Bevorzugt ist das Metallband in dem Dicht- oder Kantenschutzstreifen zu einem U-förmigen Klemmprofil umgebogen. Hierdurch kann das Metallband in einfacher Weise in einer Fahrzeugöffnung oder an einer Kante befestigt werden.

Ausführungsbeispiele der Erfindung sind in der Zeichnung dargestellt und werden nachfolgend beschrieben. Es zeigen, jeweils in schematischer Darstellung:
- Fig. 1: eine Draufsicht auf ein erstes Ausführungsbeispiel des erfindungsgemäßen Metallbands,
- Fig. 2: eine Frontansicht des Metallbands von Fig. 1 in Längsrichtung des Metallbandes betrachtet in vergrößerter Darstellung,
- Fig. 3: eine Draufsicht auf eine zweite Ausführungsform eines erfindungsgemäßen Metallbandes,
- Fig. 4: eine Frontansicht des Metallbandes von Fig. 3 in Längsrichtung des Metallbandes betrachtet in vergrößerter Darstellung, und
- Fig. 5: eine perspektivische Ansicht einer dritten Ausführungsform des erfindungsgemäßen Metallbandes in einem Dichtstreifen während des Ablängens des Dichtstreifens.

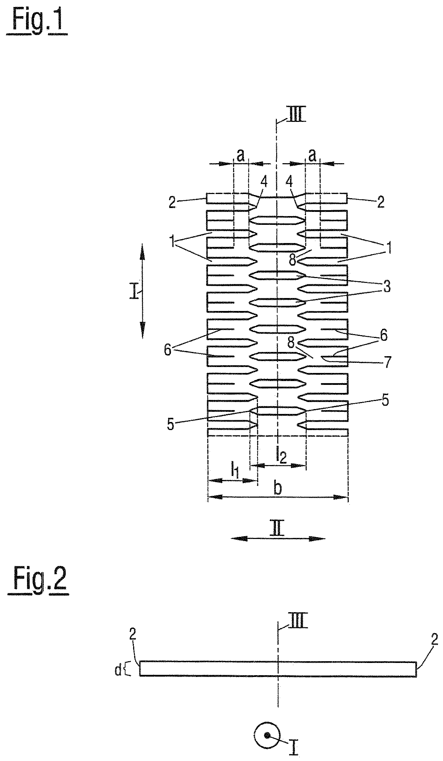

Das in Fig. 1 dargestellte Metallband, das als Einlage für Zier- oder Dichtstreifen aus flexiblem Material, insbesondere Gummi oder Kunststoff, oder Kantenschutz verwendet werden kann, weist eine Vielzahl von periodisch in Längsrichtung I des Bandes aufeinanderfolgenden Randschlitzen 1 auf, die paarweise einander gegenüberliegend von den beiden Rändern 2 des Metallbandes nach innen geführt sind. Die Randschlitze 1 weisen eine Länge l₁ auf, die etwa drei Achtel der Breite b des Metallbandes entspricht. Zwischen jeweils zwei aufeinanderfolgenden Paaren von Randschlitzen 1 weist das Metallband des weiteren jeweils einen Mittelschlitz 3 auf, dessen Länge l₂ etwa die Hälfte der Bandbreite b beträgt. Dadurch überlappen die Mittelschlitze 3 in Querrichtung II des Metallbandes mit den Randschlitzen 1 geringfügig, nämlich um etwa ein Zwölftel der Breite b.

Die Randschlitze 1 und die Mittelschlitze 3 sind durch Schneiden und Walzstrecken hergestellt und dadurch in Längsrichtung I des Metallbandes aufgeweitet. Die Randschlitze 1 weisen eine bandinnenseitig in einer Keilspitze 4 auslaufende Form auf, während die Mittelschlitze 3 zu den beiden Rändern des Metallbandes hin jeweils in einer Keilspitze 5 auslaufen.

Zusätzlich zu den Randschlitzen 1 und den Mittelschlitzen 3 ist das Metallband mit quer zur Längsrichtung I des Metallbandes verlaufenden Durchtrennungen 6 versehen, die ebenfalls durch Schneiden hergestellt, aber nicht aufgeweitet sind und jeweils von einem Rand 2 des Metallbandes in Richtung auf die dem Rand 2 gegenüberliegende Keilspitze 5 eines Mittelschlitzes 3 verlaufen. Zwischen dem bandinnenseitigen Ende 7 der Durchtrennungen 6 und der jeweils gegenüberliegenden Keilspitze 5 der Mittelschlitze 3 befindet sich jeweils ein nur kurzer, nicht durchtrennter Bereich 8. Insbesondere weist dieser Bereich eine Erstreckung a in Querrichtung II des Metallbandes von weniger als 0,5 cm, im dargestellten Ausführungsbeispiel von ca. 0,4 cm auf.

Die Mittelschlitze 3 sind bei dem Ausführungsbeispiel von Fig. 1 symmetrisch zur Mittellängsachse III des Metallbandes angeordnet. Wie in Fig. 1 dargestellt, ist ihre Länge l₂ so groß gewählt, dass die Mittelschlitze 3 bis in die Schenkel 9 des aus dem Metallband gebildeten U-Profils 10 reichen. Die Erstreckung der Mittelschlitze 3 in die Schenkel 9 des U-Profils 10 ist aber nur kurz im Verhältnis zu ihrer Länge l₂.

Wie in Fig. 2 dargestellt, weist das Metallband eine verhältnismäßig geringe Materialstärke d auf. Die Materialstärke kann 0,4 mm oder weniger betragen. Neben der Materialeinsparung ergibt sich dadurch auch ein geringes Gewicht. Zudem wird weniger Dichtmaterial benötigt, um das Metallband zu umhüllen.

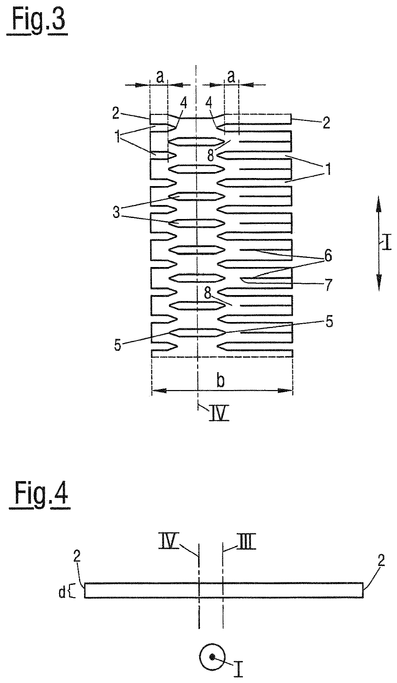

Bei dem in Fig. 3 dargestellten Ausführungsbeispiel sind die Mittelschlitze 3 nicht symmetrisch zur Mittellängsachse III des Metallbandes, sondern zu einer hierzu parallelen Längsachse IV angeordnet. Die Randschlitze 1 weisen auch bei diesem Ausführungsbeispiel eine solche Länge l₁ auf, dass sich die Randschlitze mit den Mittelschlitzen 3 nur geringfügig in Querrichtung II des Metallbandes überlappen. Dementsprechend weisen die sich vom in Fig. 3 linken Rand zum Bandinneren erstreckenden Randschlitze 1 eine geringere Länge auf als die sich vom in Fig. 3 rechten Rand zum Bandinneren erstreckenden Randschlitze 1. Die Größe der Überlappung entspricht derjenigen des Ausführungsbeispiels von Fig. 1.

Des weiteren sind bei diesem Ausführungsbeispiel Durchtrennungen 6 nur auf der Seite der langen Randschlitze 1 des Metallbandes vorgesehen, also nur ausgehend vom rechten Rand in Fig. 2. Der nicht durchtrennte Bereich 8 zwischen den bandinnenseitigen Enden 7 und der jeweils gegen-überliegenden Keilspitze 5 der Mittelschlitze 3 weist auch hier eine nur kurze Länge a von bevorzugt weniger als 0,5 cm, insbesondere gemäß dem Ausführungsbeispiel von ca. 0,4 cm auf. Aufgrund der asymmetrischen Anordnung der Mittelschlitze 3 weist der Abstand der anderen Keilspitzen 5 der Mittelschlitze 3 vom linken Rand 2 des Metallbandes ebenfalls nur eine geringe Größe auf, insbesondere im dargestellten Ausführungsbeispiel von ca. 0,5 cm. Auch ohne Durchtrennungen auf der linken Seite des Metallbandes ergeben sich daher die geschilderten Vorteile beim Ablängen dieses Metallbandes. Es ist aber auch bei einer asymmetrischen Anordnung der Mittelschlitze 3 möglich, Durchtrennungen 6 auf beiden Seiten des Metallbandes, also ausgehend von beiden Rändern 2 vorzusehen.

Fig. 4 zeigt wiederum die verhältnismäßig geringe Materialstärke d des Metallbandes von Fig. 3.

Sowohl bei dem ersten Ausführungsbeispiel als auch bei dem zweiten Ausführungsbeispiel besteht das Metallband aus einem mikrolegierten Kalt- oder Warmumformstahl. Hierdurch ergibt sich eine hohe Festigkeit. So kann die Zugfestigkeit Rₘ größer als 750 MPa betragen. Damit können vorteilhafte Eigenschaften eines Zier- oder Dichtstreifens oder Kantenschutzstreifens erreicht werden.

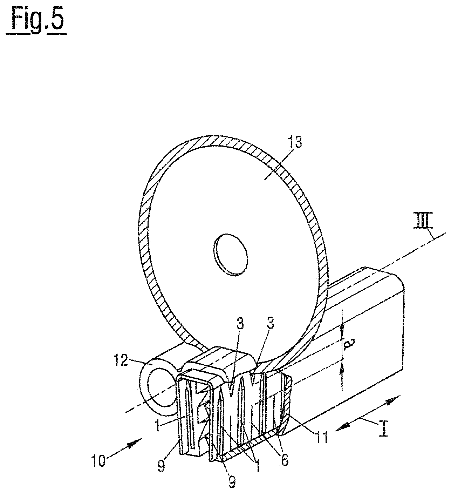

Fig. 5 zeigt das Durchtrennen eines mit einem erfindungsgemäßen Metallband ausgestatteten Klemmprofils. Das Metallband ist zu einem U-Profil 10 gebogen und mit einem Dichtmaterial 11 ummantelt. Außerdem weist das Klemmprofil eine Dichtlippe 12 auf.

Zum Durchtrennen des Klemmprofils wird in dem dargestellten Beispiel eine Trennscheibe 13 verwendet, deren Antrieb nicht dargestellt ist. Die Trennscheibe kann automatisch bei einem der Mittelschlitze 3 positioniert werden. Dadurch kann eine Durchtrennung des Klemmprofils an einer Stelle erfolgen, an welcher nur kurze nicht durchtrennte Bereiche, nämlich die Bereiche 8 zwischen den Keilspitzen 5 des Mittelschlitzes 3 und den beiden gegenüberliegenden Durchtrennungen 6 vorhanden sind. Diese Bereiche 8 weisen eine nur kurze Länge a von ca. 0,4 cm auf. Hierdurch und wegen der geringen Materialstärke des Bandes ist ein nur geringer Energieeintrag zum Durchtrennen des Klemmprofils erforderlich, wodurch sich eine geringe Beeinträchtigung des Klemmprofils ergibt. Zudem können beim Durchtrennen des Klemmprofils im Bereich eines Mittelschlitzes 3 glatte Schnittflächen erhalten werden. Außerdem entstehen verhältnismäßig wenige Verunreinigungen durch Spanbildung beim Trennprozess. Damit ist auch die Anfälligkeit gegen Korrosion reduziert.

### Bezugszeichenliste

- 1: Randschlitz
- 2: Rand
- 3: Mittelschlitz
- 4: Spitze von 1
- 5: Spitze von 3
- 6: Durchtrennung
- 7: Ende von 6
- 8: nicht durchtrennter Bereich
- 9: Schenkel von 10
- 10: U-Profil
- 11: Ummantelung
- 12: Dichtlippe
- 13: Trennscheibe
- a: Länge von 8
- b: Breite des Metallbandes
- d: Materialstärke des Metallbandes
- l₁: Länge von 1
- l₂: Länge von 3
- I: Längsrichtung des Metallbandes
- II: Querrichtung des Metallbandes
- III: Mittellängsachse des Metallbandes
- IV: Parallelachse zu III

## Patentansprüche

1. Metallband als Einlage für durch Extrusion mit Kunststoff oder Gummi ummantelte Zier- oder Dichtstreifen oder als Kantenschutz, insbesondere für Kraftfahrzeuge oder Schaltschränke, welches mit geschnittenen und/oder gestanzten Durchbrüchen (1, 3) versehen ist,
**dadurch gekennzeichnet, dass**
das Metallband aus mikrolegiertem Stahl besteht und die Materialstärke (d) des Metallbands 0,4 mm oder weniger beträgt.

2. Metallband nach Anspruch 1,
**dadurch gekennzeichnet, dass**
das Metallband aus Warm- oder Kaltumformstahl besteht.

3. Metallband nach Anspruch 1 oder 2,
**dadurch gekennzeichnet, dass**
die Materialstärke (d) des Metallbandes 0,35 mm oder weniger, insbesondere 0,3 mm oder weniger beträgt.

4. Metallband nach einem der vorhergehenden Ansprüche,
**dadurch gekennzeichnet, dass**
das Metallband beschichtet ist.

5. Metallband nach einem der vorhergehenden Ansprüche,
**dadurch gekennzeichnet, dass**
das Metallband durch rotatives Schneiden oder Stanzen und Walzstrecken hergestellt ist.

6. Dichtstreifen, insbesondere für verschließbare Fahrzeugöffnungen wie Fenster, Türen und Klappen, oder Kantenschutzstreifen, mit einem Metallband nach einem der vorhergehenden Ansprüche.

7. Dichtstreifen oder Kantenschutzstreifen nach Anspruch 6,
**dadurch gekennzeichnet, dass**
der Dichtstreifen oder Kantenschutzstreifen mit einer Umhüllung (11) aus Dichtmaterial versehen ist.

8. Dichtstreifen oder Kantenschutzstreifen nach Anspruch 6 oder 7,
**dadurch gekennzeichnet, dass**
das Metallband zu einem U-förmigen Klemmprofil (10) umgebogen ist.

## Claims

1. A metal band as an inlay for trim strips or sealing strips jacketed with plastic or rubber by extrusion or as edge protection, in particular for motor vehicles or switch cabinets, said metal band being provided with cut and/or punched apertures (1, 3),
**characterized in that**
the metal band consists of microalloyed steel and the material thickness (d) of the metal band amounts to 0.4 mm or less.

2. A metal band according to claim 1,
**characterized in that**
the metal band consists of hot-formed steel or cold-formed steel.

3. A metal band according to claim 1 or claim 2,
**characterized in that**
the material thickness (d) of the metal band amounts to 0.35 mm or less, in particular to 0.3 mm or less.

4. A metal band according to any one of the preceding claims,
**characterized in that**
the metal band is coated.

5. A metal band according to any one of the preceding claims,
**characterized in that**
the metal band is produced by rotary cutting or punching and roller stretching.

6. A sealing strip, in particular for closable vehicle openings such as windows, doors and flaps, or an edge protection strip, comprising a metal band according to any of the preceding claims.

7. A sealing strip or an edge protection strip according to claim 6,
**characterized in that**
the sealing strip or edge protection strip is provided with an envelope (11) composed of sealing material.

8. A sealing strip or an edge protection strip according to claim 6 or claim 7,
**characterized in that**
the metal band is bent into a U-shaped clamping profile (10).

## Revendications

1. Bande métallique servant d'insert pour des rubans décoratifs ou d'étanchéité enveloppés par extrusion de matière plastique ou de caoutchouc, ou servant de protection des bords, en particulier pour des véhicules automobiles ou des armoires électriques, qui est pourvue de traversées découpées et/ou estampées (1, 3),
**caractérisée en ce que**
la bande métallique est constituée d'acier micro-allié, et l'épaisseur (d) de la bande métallique est de 0,4 mm ou moins.

2. Bande métallique selon la revendication 1,
**caractérisée en ce que**
la bande métallique est constituée d'acier formé à chaud ou à froid.

3. Bande métallique selon la revendication 1 ou 2,
**caractérisée en ce que**
l'épaisseur (d) de la bande métallique est de 0,35 mm ou moins, en particulier de 0,3 mm ou moins.

4. Bande métallique selon l'une des revendications précédentes,
**caractérisée en ce que**
la bande métallique est revêtue.

5. Bande métallique selon l'une des revendications précédentes,
**caractérisée en ce que**
la bande métallique est fabriquée par découpe rotative ou estampage et laminage.

6. Ruban d'étanchéité, en particulier pour des baies de véhicules pouvant être fermées, telles que les fenêtres, les portes et les hayons, ou ruban de protection des bords, comprenant une bande métallique selon l'une des revendications précédentes.

7. Ruban d'étanchéité ou ruban de protection des bords selon la revendication 6,
**caractérisé en ce que**
le ruban d'étanchéité ou le ruban de protection des bords est pourvu d'une enveloppe (11) en matériau d'étanchéité.

8. Ruban d'étanchéité ou ruban de protection des bords selon la revendication 6 ou 7,
**caractérisé en ce que**
la bande métallique est pliée en un profilé de serrage en forme de U (10).
